# EUROPEAN PATENT SPECIFICATION

(11) **EP 1 643 031 B1**
(45) Date of publication and mention of the grant of the patent: **04.07.2007**
(21) Application number: 05256126.3
(22) Date of filing: 30.09.2005
(51) Int. Cl.: D21C 9/00, D21C 9/14, D21C 9/147, D21C 9/16, C08B 16/00, C08L 1/02

(54) **Processes for making compositions for conversion to lyocell fibers**
Verfahren zur Herstellung von Zusammensetzungen für die Konvertierung zu Lyocell Fasern
Procédé de fabrication des compositions pour la transformation en fibres de lyocell

(30) Priority: 30.09.2004 US 956915
(43) Date of publication of application: 05.04.2006
(73) Proprietor: WEYERHAEUSER COMPANY, Federal Way, WA 98063-9777 (US)
(72) Inventor: Luo, Mengkui, Tacoma, Washington 98422 (US)
(74) Representative: Bayliss, Geoffrey Cyril

(56) References cited:
- US-A- 5 985 097
- US-A1- 2004 209 078
- US-B1- 6 210 801
- US-B1- 6 235 392
- US-B1- 6 331 354

## Description

The present invention provides methods for reducing the degree of polymerization of pulps without substantially reducing the hemicellulose content. The resultant pulp product has a low copper number and can be used to make lyocell fibers.

Lyocell fibers are typically made from highly processed pulp known as "high alpha" pulp that is mostly cellulose and has had much of the hemicellulose and lignin removed. The highly purified "alpha pulps" are expensive to manufacture. A common process known as "Kraft" is used widely for the production of a pulp that is lower in cellulose and higher in hemicellulose as compared with the "high alpha" pulps. The Kraft method of pulping is generally one of the most efficient of all pulping methods. However, it is believed that the relatively large amounts of hemicellulose that are retained in Kraft pulp renders the pulp unsuitable for use in lyocell manufacture. Recently, there haye been a number of issued patents, assigned to the assignee of the present invention, which describe methods for producing pulps that are high in hemicellulose content, but have nevertheless been successfully spun into lyocell fibers. Such prior technology is centered on reducing the degree of polymerization (D.P.) of cellulose. Such reduction in degree of polymerization is thought to be responsible for the ability of the high hemicellulose pulp to fully dissolve in amine N-oxide solvents, and be spun into lyocell fibers.

Copper number represents the carbonyl content of pulp. It is generally believed that a high copper number will lead to degradation of the amine N-oxide solvent. Accordingly, to be useful for lyocell manufacture, pulp has to have a certain range of copper number. In U.S. Patent No. 6,210,801, methods are described that reduce the degree of polymerization of the cellulose of pulp without substantially reducing the hemicellulose content. These methods include treating the pulp with an acid or combination of acids; treating the pulp with steam; treating the pulp with a combination of ferrous sulfate and hydrogen peroxide; treating the pulp with a combination of a transition metal and peracetic acid; and treating the pulp with alkaline chlorine dioxide or with alkaline sodium hypochlorite. However, the ferrous sulfate is present at a concentration of from about 15000 ppm to 90000 ppm. The aforementioned methods require that a second, subsequent treatment be performed in order to reduce the copper number of the pulp to an acceptable level. In the '801 patent, the copper number is reduced by treating the pulp with sodium borohydride or sodium hydroxide, or by treating the pulp with one or more bleaching agents.

In U.S. Patent No. 6,331,354, methods are described that eliminated the need to have a subsequent treatment to lower the copper number after reducing the degree of polymerization of the cellulose. This alternate method lowered the degree of polymerization without substantially decreasing the hemicellulose content and also without substantially increasing the copper number. The method uses an oxygen reactor operated under alkaline conditions. An oxygen reactor is typically included after the brown stock -washers and-before the bleaching sequence, and is used to destroy or solubilize the colorant materials in pulp. The 354 patent describes conditions for operating an oxygen reactor to reduce the degree of polymerization of cellulose without substantially reducing the hemicellulose content or increasing the copper number.

Regardless of the advances made in reducing the degree of polymerization of cellulose in pulp, there are still opportunities to develop alternatives for reducing the degree of polymerization without substantially reducing the hemicellulose content and providing pulp with a suitable copper number. The present invention provides alternative strategies of reducing the degree of polymerization of high hemicellulose pulps that can be practiced in some existing pulp mills with bleaching sequences. The pulp mills are otherwise unable to produce pulp with a low degree of polymerization without having to increase the amounts of bleach chemicals and bleach temperature from the normal conditions.

A low pH process for reducing the degree of polymerization of a pulp having a hemicellulose content of at least 7%, is described. The low pH process is carried out at a pH of 2 to 8. A high pH process at a pH greater than 8 reduces the degree of polymerization without substantially increasing the copper number. The low pH process requires a subsequent treatment with alkali to reduce the copper number of the pulp to less than 2. The process can be practiced in pulp mills with a bleaching sequence having one or more E or D stages. At the end of the bleach sequence, a pulp having a degree of polymerization of 200 to 1100, a copper number of less than 2, and a hemicellulose content of at least 7% is provided. The pulp can be used to make lyocell fibers.

The present invention can produce pulps of low degree of polymerization in an existing pulp mill's bleaching sequence without a substantial adjustment to the amounts of chemicals and temperatures normally used.

The foregoing aspects and many of the attendant advantages of this invention will become more readily appreciated as the same become better understood by reference to the following detailed description, when taken in conjunction with the accompanying drawings, wherein:
FIGURE 1 is a schematic diagram of a bleach sequence process according to the invention;
FIGURE 2 is a schematic diagram of an alternate bleach sequence process according to the invention; and
FIGURE 3 is a schematic diagram of a process to make lyocell fibers.

Much of the chemical pulp being produced by the Kraft process is put through a bleaching sequence for the removal of the colorant components in pulp. The bleaching sequence can comprise one or more bleach stages that are designated by the letters C, E, H, D, P, and O. Each stage refers to the specific chemical used in the bleaching of pulp. There are, of course, almost infinite variations of temperature, chemical dosage, pressure, and pulp consistency that can be used at each stage of bleaching. A thorough discussion of bleaching chemistry is not necessary here, however, reference is made to the "Handbook of Pulping and Papermaking" by Christopher S. Biermann. A consequence of bleaching pulp is a concurrent degradation of cellulose. Degradation of cellulose outside the context of the prior patents described in the background section, related patents and applications, and the present application is disadvantageous because it leads to a decrease in pulp strength. However, while some prior art teaches the prevention of the degradation of cellulose during bleaching (see, for example, Samuelsson, U.S. Patent No. 5,985,097), the present invention seeks to accelerate the degradation of cellulose with a catalyst in one or more stages of bleaching or between stages to produce pulps that are suitable for lyocell manufacture. With the addition of a catalyst in a bleaching stage or interstage between stages, the overall bleach sequence process according to the invention lowers the degree of polymerization of the cellulose in pulp to within the range of 200 to 1100, without significantly reducing the hemicellulose content of the pulp. The copper number is adjusted to be less than 2, either concurrently with the reduction in the degree of polymerization or subsequent to the reduction in the degree of polymerization. The process according to the invention can be practiced in pulp mills with bleach sequences that normally produce high hemicellulose pulps that are otherwise unsuitable for lyocell manufacture. The process according to the invention can render the pulps useful for lyocell manufacture.

The process according to the present invention can be practiced in bleach sequences having a D stage using chlorine dioxide and an E stage or extraction stage using sodium hydroxide and hydrogen peroxide. Because some of the current bleach sequence conditions in existing bleach plants are too mild to reduce the degree of polymerization of cellulose to the range of 200 to 1100, a catalyst is added to a bleach stage or interstage between stages in the bleach sequence to increase the overall reduction of the degree of polymerization of cellulose. It is to be appreciated that while hydrogen peroxide is the preferred chemical for use in the E stage, other oxidants can be used. Similarly, while sodium hydroxide is the preferred chemical for use in the E stage other alkali chemicals can be used. Furthermore, while each stage of bleaching generally is carried out in a single bleaching tower devoted to one stage of bleaching, it is possible to practice the invention in one or more bleaching towers, where more than one stage of bleaching can be carried out in a single bleaching tower or where one stage can be practiced in one or more towers.

Chemical pulp, such as Kraft pulp, after it has been washed in brownstock washers, is normally "bleached" to remove the colorant components found in the pulp. Brownstock pulp that has been chemically digested according to the Kraft process under alkaline conditions, and has not had an acidic prehydrolysis treatment, will contain an amount of hemicellulose that is at least 7% by weight as measured by a sugar content assay based on a proprietary Weyerhaeuser sugar content assay (AM W-LC-wood pulp). The reduction in the degree of polymerization takes place without substantially reducing the hemicellulose content of the pulp. Throughout this application, the phrase, "without substantially reducing the hemicellulose content" means without reducing the hemicellulose content by more than 50%, preferably not more than 15%, and most preferably not more than 5% during the D.P. reduction step.

According to the present invention, a catalyst to reduce the degree of polymerization of the cellulose of a pulp is provided in an E stage, or before an E stage but after a D stage, or before both a D and an E stage. According to the present invention, there is a low pH process for the reduction of the degree of polymerization. The low pH process reduces the degree of polymerization of cellulose below at a pH of 2 to 8. When the reduction in degree of polymerization takes place at a low pH, a subsequent treatment with an alkali, such as sodium hydroxide, is performed to reduce the copper number to less than 2. This subsequent alkali treatment can advantageously take place in an E stage where hydrogen peroxide still exists. Ideally, for low pH, degree of polymerization reduction, the time to reduce the degree of polymerization and the time to reduce the copper number are respectively about 10 minutes and about 45 minutes. However, when practiced in a mill, the times can be longer. Throughout this application, the phrase "without substantially increasing the copper number," means without increasing the copper number by more than 100%, preferably not more than 50%, and most preferably not more than 25% during reducing the degree of polymerization. Copper number is measured by Weyerhaeuser method AM W-PPD-3. A useful copper number range of pulp produced by the process according to the invention is less than 2. Sodium hydroxide in an amount of about 1.5% based on the weight of the pulp weight is added to reduce the copper number of pulp to less than 2. The low pH process is suited to reduce the degree of polymerization of cellulose of a pulp when the starting degree of polymerization is up to 2000. Reduction of the degree of polymerization at a pH of 2 to 8 will result in a 10% to 20 % reduction in degree of polymerization from the starting value. Degree of polymerization is measured using ASTM Test D1795.

According to one embodiment of the present invention, in a low pH process of pH 2 to 8, a catalyst, hydrogen peroxide and optionally sodium hydroxide or an acid are added to a vessel ahead of an E stage. The vessel is provided with sodium hydroxide and hydrogen peroxide to reduce the degree of polymerization of cellulose, and if necessary, the vessel may be provided with an amount of acid to maintain the pH from 2 to 8. The acid may be from carbon dioxide gas. The reduction in the degree of polymerization of cellulose occurring ahead of an E stage leaves the E stage to be used as the copper control stage in addition to further degree of polymerization reduction. The amount of catalyst is 0.1 ppm to 30 ppm based on the weight of the pulp. The amount of hydrogen peroxide is 1% to 3% based on the weight of the pulp. The amount of sodium hydroxide is 1% to 4% based on the weight of the pulp. The temperature can be 50°C to 100°C. The reduction of degree of polymerization at a low pH requires a subsequent treatment with sodium hydroxide to lower the copper number to less than 2.

In another embodiment of the present invention, in a low pH process of a pH of 2 to 8, the E stage is provided with a catalyst, sodium hydroxide and hydrogen peroxide within the quantities stated above, to reduce the degree of polymerization of cellulose. The bleach sequence can be provided with a second E stage that is used for copper number control. If the E stage is preceded by a D stage, it is advantageous to add the catalyst, sodium hydroxide, and hydrogen peroxide to reduce the degree of polymerization of cellulose interstage between the D and E stages, since the effluent out of a D stage will normally have a pH of 2 to 8. The need to add an acid to maintain the pH at a low level is avoided.

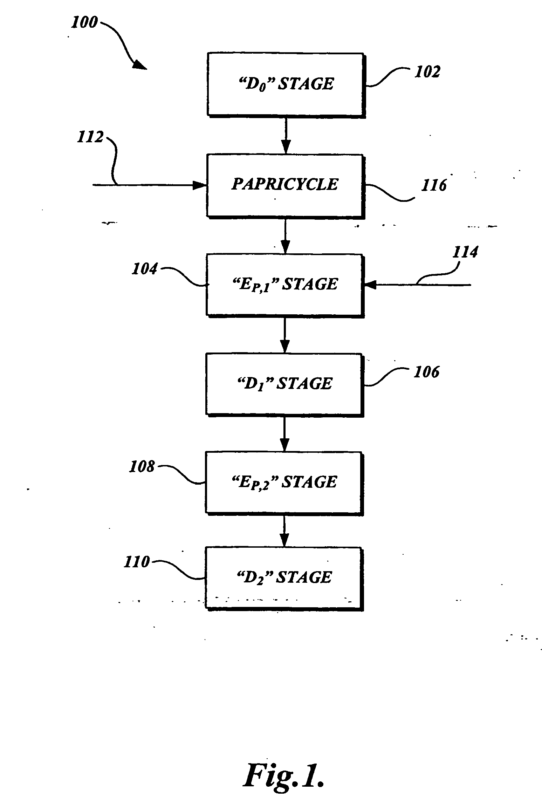

Referring to FIGURE 1, a representative bleach sequence is provided which includes a D₀ stage (block 102), E_{P.1} stage (block 104), D₁ stage (block 106), E_{P.2} stage (block 108), and a D₂ stage (block 110). For a high pH, degree of polymerization reduction, the catalyst may be added at either the first or second Eₚ stage. Shown in FIGURE 1, is addition of a catalyst 114 in the first E stage, block 104. It may be advantageous to carry out the reduction of the degree of polymerization in the E_{P.1} stage, and the E_{P.2} stage can be used for further adjustment of the degree of polymerization, if necessary. Carrying out the bleach process depicted in FIGURE 1, with the addition of a catalyst before or in at least one E stage will result in a pulp having a degree of polymerization of 200 to 1100, a hemicellulose content of at least 7%, and a copper number of less than 2.

Referring still to FIGURE 1, for low pH, degree of polymerization reduction, the catalyst may be added interstage between the D₀ and the E_{P.1} stage at location 112. This is advantageous, since the effluent out of the D₀ stage will be at a pH of about 2. Therefore, the need to add acid to bring the pH between 2 to 8 will be partially or totally avoided. The bleach sequence of FIGURE 1 is equipped with an additional vessel to carry out a step known as "papricycle", block 116. The papricycle step would normally treat the pulp with alkali in between a D and E stage. However, if the papricycle vessel is used for the reduction of degree of polymerization, the addition of alkali to a papricycle step can be avoided, since the reduction in degree of polymerization is preferably done at a low pH, such as in the effluent from the D₀ stage. Therefore, the first or the second E stage can be used to control the copper number to about 2 by the addition of an alkali and peroxide. Alternatively, low pH, degree of polymerization reduction can be carried out in the first E_{P.1} stage, leaving the second E_{P.2} stage for copper number control.

An advantage of the present invention is that the use of a catalyst can reduce the degree of polymerization of cellulose of a pulp without any substantial adjustment to the normal rates of chemicals or temperatures normally used in the bleach stages. In some instances, the use of bleaching chemicals may be reduced from the normal amounts with the use of a catalyst. The typical operating conditions of the bleach sequence of FIGURE 1, are provided below.

In the first D₀ stage, block 102, the pulp consistency is adjusted to about 10% with the addition of water. Chlorine dioxide corresponding to an amount of 0.5 to 1.5% weight based on the weight of the pulp, is added. The mixture is held at a temperature from 65°C to 75°C for 40 to 90 minutes.

In the papricycle stage, block 116, sodium hydroxide is added at 0.5% to 1.5% based on the weight of the pulp. The temperature is 60°C to 80°C, and the duration is 15 to 60 minutes.

In the first E_{P.1} stage, block 104, the pulp consistency is maintained at about 10% with the addition of water. Sodium hydroxide is charged to the stage in an amount of 1.5% to 3% based on the weight of the pulp. Hydrogen peroxide is charged to the stage in an amount of 1% to 3% based on the weight of the pulp. The temperature is about 75°C to about 90°C. The stage duration is 50 to 90 minutes.

In the second D₁ stage, block 106, chlorine dioxide is added in an amount of 0.5% to 1.5% based on the weight of the pulp, and the pulp was again diluted to bring the consistency to about 10%. The temperature is 70°C to 85°C. The stage duration is 60 to 90 minutes.

In the second E_{P.2} stage, block 108, sodium hydroxide is charged to the stage with water being added to achieve a consistency of about 10%. The sodium hydroxide charge is 1.5% to 3.5% based on the weight of the pulp. Hydrogen peroxide is also charged in an amount of 1% to 3% based on the weight of the pulp. The temperature is 80°C to 90°C. The stage duration is 50 to 90 minutes.

In the second D₂ stage, block 110, chlorine dioxide is charged at 0.3% to 1% based on the weight of the pulp. The temperature is 70°C to 85°C. The stage duration is 60 to 90 minutes.

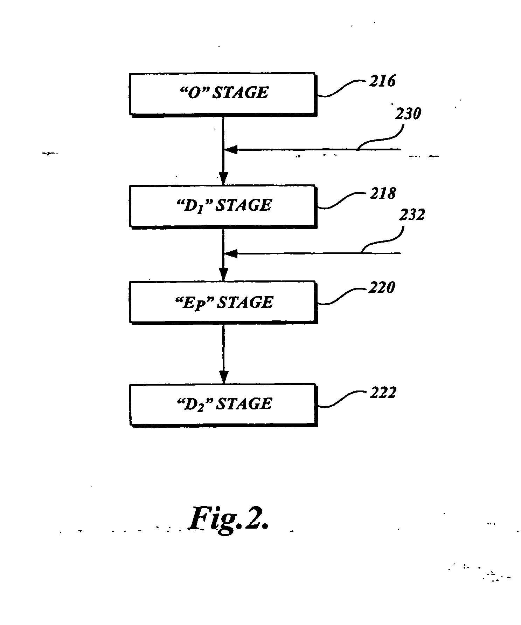

Referring to FIGURE 2, another representative bleach sequence according to the present invention is provided. The bleach sequence includes an O stage (block 216), D₁ stage (block 218), Eₚ stage (block 220), and a D₂ stage (block 222). Bleach sequences having a single E stage, can use the low pH process for reduction of degree of polymerization.

In one embodiment, using high pH, degree of polymerization reduction, the catalyst, hydrogen peroxide, and sodium hydroxide is added to the single Eₚ stage, block 220, which reduces the degree of polymerization of cellulose, without substantially increasing the copper number and without substantially reducing the hemicellulose content.

In one embodiment, using low pH, degree of polymerization reduction, the catalyst is added before the D₁ stage and interstage between the O and the D₁ stages at location 230. If added interstage between the O and the D₁ stages, then it may be necessary to add acid to lower the pH to 2 to 8. The acid can be carbon dioxide gas. A vessel, such as a mixer or tower may be provided interstage between the O and the D₁ stages for use in the reduction of degree of polymerization. The Eₚ stage is then used for the lowering the copper number to less than 2 with an alkali, such as sodium hydroxide.

In one embodiment, the low pH, degree of polymerization reduction may be carried out in an Eₚ stage, block 220. Catalyst, sodium hydroxide, and hydrogen peroxide is added to the Eₚ stage. The Eₚ stage may be split into two vessels or towers, wherein the low pH degree of polymerization reduction occurs in a first tower of the Eₚ stage, and the copper number control to reduce the copper number to about 2 occurs in a second vessel or tower of the Eₚ stage.

In one embodiment, the low pH, degree of polymerization reduction may be carried after the D₁ stage, block 218, but before the Eₚ stage, block 220. Catalyst, sodium hydroxide, and hydrogen peroxide is added before the Eₚ stage at location 232, which will advantageously be at a pH of 2 to 8 already duc to the effluent from the D₁ stage. In this case, sodium hydroxide and acid is optional to maintain pH from 2 to 8. The Eₚ stage may than be used for copper number control to reduce the copper number to about 2.

An advantage of the present invention is that the use of a catalyst can reduce the degree of polymerization of cellulose of pulp without any substantial adjustment to the normal rates of chemicals or stage temperatures. In some instances, the use of bleaching chemicals may be reduced from the normal amounts with the use of a catalyst. The typical operating conditions of the bleach sequence of FIGURE 2, are provided below.

The first stage of bleaching is an O stage, block 216. The O stage comprises bleaching with oxygen. Oxygen bleaching is bleaching with oxygen under pressure. Oxygen is considered to be less specific for the removal of colorant components than the chlorine compounds. Oxygen bleaching takes place in an oxygen reactor. The reactor can operate at a high consistency, wherein the consistency of the feedstream to the reactor is greater than 20% or it can operate at medium consistency, where the medium consistency ranges between 8% up to 20%. Preferably, if a high consistency oxygen reactor is used, the oxygen pressure can reach the maximum pressure rating for the reactor, but more preferably is greater than 0 to 0.6 MPa (0 to 85 psig). In medium consistency reactors, the oxygen can be present in an amount ranging from greater than 0 to 50 g/kg (greater than 0 to 100 pounds per ton) of the pulp, but is more preferably 25 to 40 g/kg (50 to 80 pounds per ton) of pulp. The temperature of the O stage ranges from 100°C to 140°C.

The D₁ stage, block 218, comprises bleaching the pulp coming from the oxygen reactor with chlorine dioxide. The amount of chlorine dioxide used in this stage ranges from 0.5% to 1.5% based on the weight of the pulp. The temperature of the D₁ stage ranges from 70°C to 100°C. The stage duration is 60 to 90 minutes.

The Eₚ stage, block 220, is the hydrogen peroxide reinforced extraction stage where the pulp is treated using sodium hydroxide in an amount ranging from 1.5% to 5% based on the weight of the pulp. The amount of hydrogen peroxide ranges from 1.5% to 3% based on the weight of the pulp. The temperature of the Ep stage ranges from 80°C to 95°C. The stage duration is 60 to 90 minutes.

In one embodiment, the second D₂ stage, block 222, follows the Eₚ stage, block 220. The amount of chlorine dioxide used in this stage ranges from 0.5% to 1.5% based on the weight of the pulp. The temperature of the D₂ stage ranges from 70°C to 90°C. The stage duration is 60 to 90 minutes.

According to the present invention, any of the aforementioned schemes for reducing the degree of polymerization of cellulose results in a pulp having a degree of polymerization of cellulose of 200 to 1100, a copper number of less than 2, a hemicellulose content of at least 7%.

A typical mill will have undesired metals, such as magnesium and calcium in the water, which can be introduced into the pulp. Magnesium and calcium compounds may have a deactivating effect on the catalyst. Ca(II) and Mg(II) ion species in water were discovered to deactivate the catalyst and prevent cellulose degradation. The metals can be removed by the addition of a chelating agent with the catalyst in or before any of the D or E stages. Suitable chelating agents, include, but are not limited to aminopolycarboxylic acids (APCA), ethylenediaminetetraacetic acid (EDTA), diethylene triamine pentaacetic acid (DTPA), nitrilotriacetic acid (NTA), phosphonic acids, ethylenediaminetetramethylene-phosphonic acid (EDTMP), diethylenetriaminepentamethylenephoshonic acid (DTPMP), nitrilotrimethylenephosphonic acid (NTMP), polycarboxylic acids, gluconates, citrates, polyacrylates, and polyaspartates or any combination thereof. A chelating agent may be added in an amount up to 0.1 % by weight based on the weight of the pulp. In addition to the chelating agents, the pulp may be washed under acidic conditions to remove the normally occurring metals before or after the process to reduce the degree of polymerization. In bleach sequences having a D stage as the last stage of the bleach sequence, the D stage can wash out the normally occurring metals and catalysts.

The present invention therefore provides a pulp useful for lyocell manufacture that has a degree of polymerization in the range of 200 to 1100, at least 7% hemicellulose by weight, and a copper number that is less than 2. The pulp can also have total transition metals (iron, manganese, copper, cobalt and nickel) content of less than 25 ppm. Transition metals are measured using Weyerhaeuser method AM T-266M/E 6010. Pulps treated in accordance with the invention also exhibit a low ΔR (hereinafter Delta R), which is the differential between R₁₀ and R₁₈. R₁₀ refers to the residual undissolved material that is left after attempting to dissolve the pulp in a 10% caustic solution. R₁₈ refers to the residual amount of undissolved material left after attempting to dissolve the pulp in an 18% caustic solution. R₁₀ and R₁₈ are measured using Weyerhaeuser method AM T-235.

The pulp treated in accordance with the present invention can be dissolved in a solvent and spun into lyocell fibers by meltblowing, centrifugally spinning, or spunbounding a solution of cellulose as described in U.S. Patent No. 6,235,392. Alternatively, a dope produced by the pulp made in accordance with the present invention can be spun in any conventional manner used for high alpha pulps

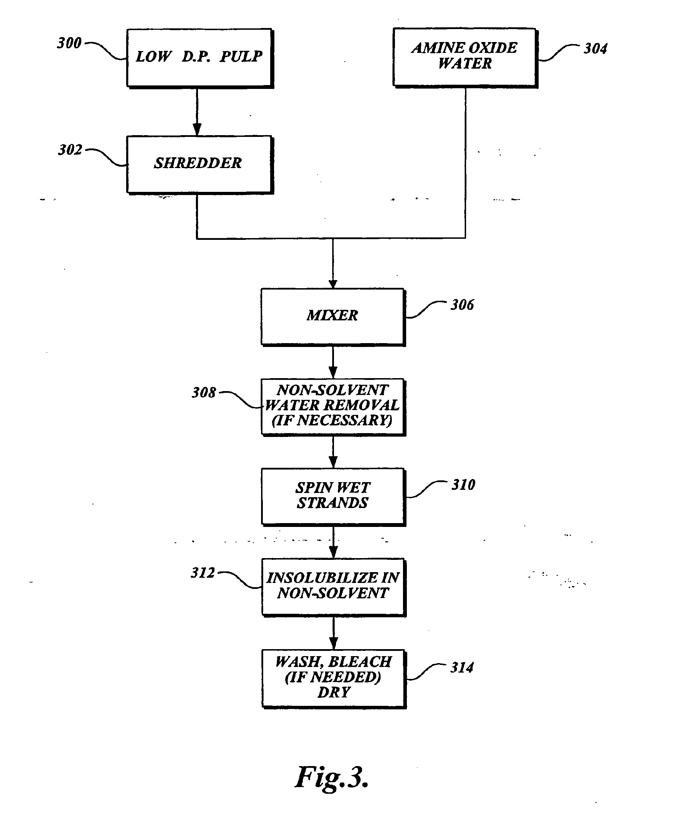

FIGURE 3 shows a block diagram of one embodiment of a method for forming lyocell fibers from the pulps made according to the present invention. Starting with pulp that has had the D.P. reduced in block 300, the pulp is physically broken down, for example by a shredder in block 302. The pulp is dissolved with an amine oxide-water mixture to form a dope, block 304. The pulp can be wetted with a non-solvent mixture of about 40% NMMO and 60% water. The mixture can be mixed in a double arm sigma blade mixer and sufficient water distilled off to leave about 12-14% based on NMMO so that a cellulose solution is formed, block 306. Alternatively, NMMO of appropriate water content may be used initially to eliminate the need for the vacuum distillation block 308. This is a convenient way to prepare spinning dopes in the laboratory where commercially available NMMO of about 40-60% concentration can be mixed with laboratory reagent NMMO having only about 3% water to produce a cellulose solvent having 7-15% water. Moisture normally present in the pulp should be accounted for in adjusting the water present in the solvent. Reference is made to articles by Chanzy, H., and A. Peguy, Journal of Polymer Science, Polymer Physics Ed. 18:1137-1144 (1980), and Navard, P., and J.M. Haudin, British Polymer Journal, p. 174 (Dec. 1980) for laboratory preparation of cellulose dopes in NMMO and water solvents. A third alternative for making dope, is to mix the pulp with water, followed by dewatering the pulp, and then dissolving the pulp with NMMO.

The dissolved, bleached pulp (now called the dope) is forced through extrusion orifices in a process called spinning, block 310, to produce cellulose filaments that are then regenerated with a non-solvent, block 312. Spinning to form lyocell-molded bodies, including fibers, films, and nonwovens, may involve meltblowing, centrifugal spinning, spun bonding, and dry-jet wet techniques. Finally, the lyocell filaments or fibers are washed, block 314.

### EXAMPLE A.

### REDUCTION OF DEGREE OF POLYMERIZATION AT LOW PH WITH A CATALYST FOLLOWED BY COPPER NUMBER CONTROL

Never dried pulp (Karnloops D₁ pulp) having a consistency of 10% was mixed with 1.5% NaOH (based on pulp weight) and 2.3% H₂O₂ (based on pulp weight) in a container and bleached at 88°C for one hour. The pH was low at between 2 and 8. A catalyst was added to increase the reduction of degree of polymerization of cellulose. A control sample has a degree of polymerization of 718 and a copper number of 0.8. The results are summarized in Table 1.

**TABLE 1: OTHER CATALYSTS FOR BLEACHING**

| Pulp | Catalyst | Catalyst in water (ppm) | D. P./copper number (post treatment) | Comment |
|---|---|---|---|---|
| Kamloops D1 | None | | 939 | |
| Kamloops D1 | Water/H₂O₂/NaOH | 0 | 718/0.8 | Control |
| Kamloops D1 | CuSO₃ | 1.1 | 555/1.1 | 30 minutes bleaching, then add another 1.5% NaOH to control copper number |

These results indicate that mill pulp can be degraded to very low D.P. with a Cu(II) catalyst. The copper number can be reduced by adding sodium hydroxide after 30 minutes of bleaching.

### EXAMPLE B

### REDUCTION OF DEGREE OF POLYMERIZATION AT LOW PH WITH A CATALYST FOLLOWED BY COPPER NUMBER CONTROL

Never dried pulp (Kamloops D₀ pulp with pH of 3.54) having a consistency of 10% was mixed with chemicals in a container and bleached at 68°C for 15 minutes in a lab. The pH is low at about 2 to 8. The samples were then bleached in an Eₚ stage for copper number control. The results are summarized in Table 2.

**TABLE 2: USING THE CATALYST IN OTHER STAGE**

| Sample | Treatment | pH (NaOH added to adjust) | H₂O₂ (%) | Cu(II) in water, ppm | EDTA* (lb/ton) | D.P.* | | |
|---|---|---|---|---|---|---|---|---|
| K | Control | 5 | 0 | 0 | 0 | 755 | | |
| L | Treated | 5.2 | 0.5 | 0 | 0 | 732 | | |
| M | Treated | 4.8 | 0.5 | 3 | 0 | 636 | | |
| | | | | | | D.P.* | CU* ppm | Fe* ppm |
| G | Treated | 5.9 | 0.5 | 1.5 | 0 | 790 | 35 | 38 |
| H | Treated | 5.9 | 0.5 | 1.5 | 1.9 | 806 | 20 | 29 |
| I | Treated | 5.9 | 0.5 | 1.5 | 1.9 | 798 | 21 | 30 |
| J | Treated | 5.9 | 0.5 | 1.5 | 0 | 811 | 32 | 27 |
| Control | None | 5.9 | 0 | 0 | 0 | 1318 | 27 | 33 |
| *The samples K, L, M were then beached with 5%NaOH and 4% H₂O₂ at 88C for 1 hour and dried for D.P. measurement. Samples G, H, I, and J arc the same treated samples which were bleached with 2.5% NaOH, 2.0% H₂O₂, and optionally EDTA, at 88C for I hour, filtered once under vacuum, and dried for D.P. and metals measurement. | | | | | | | | |

The results indicate that reduction of the degree of polymerization with a catalyst can be used in a stage before an Eₚ stage to lower the amounts of chemicals required for the same D.P. reduction without a catalyst, EDTA can be added to lower the metals in pulp without affecting D.P. reduction when followed by one or more D or E stages.

### EXAMPLE C

### REDUCTION OF DEGREE OF POLYMERIZATION AT LOW PH WITH A CATALYST FOLLOWED BY COPPER NUMBER CONTROL

Never dried pulp (Flint River mill fluff pulp from D₁ stage) was optionally adjusted to a pH of 2.0 using H₂SO₄ and EDTA at 1 kg/ton pulp and mixed for 15 minutes at 50°C. After filtering, pulp having a consistency of 10% is mixed with tap water and 2.4% NaOH (based on pulp weight) and 3.4% H₂O₂ (based on pulp weight) in a container and bleached in bath at 88°C for 1.0 hour in a lab. A catalyst was added to increase the reduction of degree of polymerization of cellulose. The pH was between 2 and 8. A control sample has a degree of polymerization of 1052 and a copper number of 0.6. The results are summarized in Table 3.

**TABLE 3: USING THE CATALYSTS FOR BLEACHING FLUFF MILL PULP**

| Treatment | EDTA/ H₂SO₄ treatment | Catalyst | Catalyst in water, ppm | EDTA* (kg/ton) | D.P. | Copper number |
|---|---|---|---|---|---|---|
| Control | Yes | No bleaching | | 1 | 1052 | 0.6 |
| Treated | Yes | bleached | 0 | 1 | 862 | 0.9 |
| Treated*** | No | Cu(II)SO₄ hydrate | 6 | 0 | 810 | 1.1 |
| Treated*** | No | Cu(II)SO₄ hydrate | 11 | 0 | 774 | 1.3 |
| Treated**** | No | Cu(II)SO₄ hydrate | 3 | 0 | 773 | 1.2 |
| Treated***** | No | Cu(II)SO₄ hydrate | 3 | 0 | 763 | 1.1 |
| Treated****** | No | Cu(II)SO₄ hydrate | 2.7 | 0 | 746 | 1.0 |
| | | | | | | R₁₀/R₁₈ |
| Treated******* | No | Cu(II)SO₄ hydrate | 3 | 0 | 732 | 83.9/87.5 |
| | | | | | | |
| *** 0.45% NaOH and 2.2% H₂O₂ were used for bleaching for 0.5 hour, then 1.1% of NaOH was added to continue bleaching for another 0.5 hour. | | | | | | |
| **** 045% NaOH and 2.2% H₂O₂ were used for bleaching for 0.75 hour, then 1.1% of NaOH was added to continue bleaching for another 0.25 hour. | | | | | | |
| ***** 1.0% NaOH and 2.2% H₂O₂ were used for bleaching for 0.5 hour, and then 1.5% of NaOH was added to continue bleaching for another 0.5 hour. | | | | | | |
| ****** 1.0% NaOH and 2.2% H₂O₂ were used for bleaching for 0.58 hour, and then 1.4% of NaOH was added to continue bleaching for another 0.42 hour. | | | | | | |
| ******** 0.8% NaOH and 2.2% H₂O₂ were used for bleaching for 0.5 hour, then 0.8% of NaOH was added to continue bleaching for another 0.5 hour. Method for measuring R₁₀, R₁₈ is Weyerhaeuser method: AM T-235 | | | | | | |

These results indicate that D.P. reduction at low pH (less than 8) followed by alkali addition and high pH (greater than 8) will control copper number.

The results indicate that a fluff grade pulp can be degraded with a Cu(II) catalyst to a D.P. range that is suitable for lyocell (low D.P. and low copper number). A chelating agent, such as EDTA can be used to lower metals.

### EXAMPLE D

### REDUCTION OF DEGREE OF POLYMERIZATION AT LOW PH WITH A CATALYST FOLLOWED BY COPPER NUMBER CONTROL

Never dried pulp (Flint River D₁ pulp) was used for making low DP pulp in a lab. The amounts of NaOH and H₂O₂ used are provided in Table 4. A catalyst was added to increase the reduction of degree of polymerization of cellulose. The pH was low at between 2 and 8. A control sample has a degree of polymerization of 1272 and a copper number of 0.6

**TABLE 4 : USING THE CATALYST FOR BLEACHING FLUFF MILL PULP**

| Treatment | NaOH/H₂O₂ (lb/lb) | Catalyst | Catalyst in water, ppm | Final pH (Eop) | D.P. (post treatment) | Copper number |
|---|---|---|---|---|---|---|
| Control | | | | | 1272 | 0.6 |
| Treated* | 0/50 | Cu(II)SO₄ hydrate | 3.5 | 12 | 783 | 1.1 |
| * 0% NaOH and 1% H₂O₂ were used for bleaching for 0.5 hours, then 1% NaOH was added to continue for another 0.5 hour. | | | | | | |

These results indicate that a normal fluff D₁ pulp can be degraded with a catalyst to a D.P. range that is suitable for lyocell applications (low D.P. and low copper number). Alkaline addition is needed to control copper number to less than 2.

### EXAMPLE E

### REDUCTION OF DEGREE OF POLYMERIZATION AT LOW PH WITH A CATALYST FOLLOWED BY COPPER NUMBER CONTROL

Never dried pulp (Flint River post oxygen wash (POW) pulp) was used for making low D.P. pulp in a lab. The amounts of NaOH and H₂O₂ used are provided in Table 5. A catalyst was added to increase the reduction of degree of polymerization of cellulose. The pH was about 2 to 8. A control sample has a degree of polymerization of 1272 and a copper number of 0.6.

**TABLE 5: USING THE CATALYST FOR BLEACHING FLUFF MILL PULP**

| Treatment | NaOH/H₂O₂ (Ib/Ib) | Catalyst | Catalyst in water, ppm | Final pH (Eop) | D.P. (post number) | Copper treatment |
|---|---|---|---|---|---|---|
| Control | | | | | 1272 | 0.6 |

| | | | | | | Viscosity (FB) |
|---|---|---|---|---|---|---|
| POW** | 0/0 | Cu(II)SO₄ hydrate | 6.6 | 8 | 1156 | 66 |
| POW** | 0/10 | Cu(II)SO₄ hydrate | 11 | 8.6 | 1128 | 62 |
| POW** | 0/10 | Cu(II)SO₄ hydrate | 11 | 2.5 | 1076 | 55 |
| POW*** | 0/10 | Cu(II)SO₄ hydrate | 11 | 6 | 1015 | 47 |
| | | | | | Mg/TM | Viscosity (FB) |
| POW**** | 0/10 | Cu(II)SO₄ hydrate | 6 | 8.11 | 3.5 | 74 |
| POW**** | 0/10 | Cu(II)SO₄ hydrate | 6 | 4.45 | 3.5 | 68 |
| POW**** | 0/10 | Cu(II)SO₄ hydrate | 6 | 3.10 | 3.5 | 60 |
| | | | | | | |
| ** 70°C, 70 minutes. | | | | | | |
| *** 88°C and 70 minutes. | | | | | | |
| **** 70°C and 120 minutes. TM is the total of transition metal (Fe, Mn, Cu, Co, Ni) in pulp and bleaching liquid. | | | | | | |
| Method for measuring falling ball (FB) viscosity: Weyerhaeuser method: AM W-PPD-8 | | | | | | |
| Method for measuring metals: Weyerhaeuser method AM T-266M/E-6010 | | | | | | |

A POW pulp can be bleached with hydrogen peroxide and a catalyst, such as Cu (II), to lower viscosity at a pH in the range of 2 to 8 and a temperature range of 50 to 100°C. If POW pulp viscosity is lowered with a catalyst, then a normal bleaching sequence used for fluff pulp can be used for lyocell production. Productivity can be increased, chemical cost is lowered, and energy will be saved. Catalysts can be used in bleaching stage including D or E stages.

## Claims

1. A process for making a composition for conversion to lyocell fiber, the process comprising:
contacting a pulp comprising cellulose and at least 7% hemicellulose with an oxidant and a catalyst for catalysing the reduction of the degree of polymerization of cellulose for a first period of time to reduce the average degree of polymerization of the cellulose at a pH of 2 to 8, followed by contacting the pulp with an alkali for a second period of time to reduce the copper number of the pulp to less than 2, without substantially reducing the hemicellulose content of the pulp, wherein the catalyst amount is less than 30 ppm.

2. A process as claimed in claim 1, wherein the catalyst comprises a metal ion selected from at least one of Fe(II), Fe(III), Mn(II), Cu(II), Cu(I), Co(II), Co(III), Ni(II), the salts thereof, or any combination thereof.

3. A process as claimed in claim 1 or claim 2, wherein the amount of oxidant is 1 % to 4% based on the weight of the pulp.

4. A process as claimed in any of claims 1 to 3, wherein the temperature during the reduction of degree of polymerization is 50°C to 100°C.

5. A process as claimed in any of claims 1 to 4, further comprising adding a chelating agent.

6. A process as claimed in claim 5, wherein the chelating agent is at least one of aminopolycarboxylic acid (APCA), ethylenediaminetetraacetic acid (EDTA), diethylenetriamine pentaacetic acid (DTPA), nitrilotriacetic acid (NTA), phosphonic acid, ethylenediaminetetramethylene-phosphonic acid (EDTMP), diethylenetriaminepentamethylenephosphonic acid (DTPMP), nitrilotrimethylenephosphonic acid (NTMP), a polycarboxylic acid, a gluconate, a citrate, a polyacrylate, a polyaspartate or any combination thereof.

7. A process as claimed in claim 5 or claim 6, wherein the amount of chelating agent is about 0.1 % based on the weight of the pulp.

8. A process as claimed in any of claims 1 to 7, wherein the reduction in degree of polymerization is 10% to 15%.

9. A process as claimed in any of claims 1 to 8, further comprising adding an acid to maintain the pH at 2 to 8.

10. A process as claimed in any of claims 1 to 9, further comprising adding carbon dioxide to maintain the pH at 2 to 8.

11. A process as claimed in any of claims 1 to 10, wherein the first period of time is at least 15 minutes.

12. A process as claimed in any of claims 1 to 10, wherein the first period of time is at least 45 minutes.

13. A process as claimed in any of claims 1 to 12, wherein the oxidant is hydrogen peroxide.

14. A process as claimed in claim 1 comprising
a D stage; and
an E stage, wherein a pulp is bleached in the presence of a catalyst after the D stage and before the E stage at a pH of 2 to 8, and the copper number is reduced in the E stage.

15. A process as claimed in claim 1 comprising
a D stage; and
an E stage, wherein the pulp is bleached in the presence of a catalyst before the D and E stages at a pH of 2 to 8, and the copper number is reduced in the E stage.

16. A process as claimed in claim 1 comprising
a first E stage; and
a second E stage, wherein the pulp is bleached in the first E stage in the presence of a catalyst at a pH of 2 to 8, and the copper number is reduced in the second stage.

## Patentansprüche

1. Verfahren zur Herstellung einer Zusammensetzung zur Konvertierung zu Lyocell-Fasern, wobei das Verfahren umfasst:
in-Kontakt-bringen einer Pulpe, enthaltend Cellulose und mindestens 7% Hemicellulose, mit einem Oxidans und einem Katalysator zur Katalyse der Reduktion des Polymerisationsgrades der Cellulose über eine erste Zeitspanne, um den durchschnittlichen Polymerisationsgrad der Cellulose bei einem pH-Wert von 2 bis 8 zu reduzieren, gefolgt von einem in-Kontakt-bringen der Pulpe mit einer Base über eine zweite Zeitspanne, um die Kupferzahl der Pulpe auf weniger als 2 zu reduzieren, ohne den Hemicellulosegehalt der Pulpe wesentlich zu reduzieren, wobei die Katalysatormenge bei weniger als 30 ppm liegt.

2. Verfahren nach Anspruch 1, wobei der Katalysator ein Metallion, ausgewählt aus mindestens einem von Fe(II), Fe(III), Mn(II), Cu(II), Cu(I), Co(II), Co(III), Ni(II), dessen Salzen, oder eine beliebige Kombination davon, enthält.

3. Verfahren nach Anspruch 1 oder 2, wobei die Menge an Oxidans, bezogen auf das Gewicht der Pulpe, 1% bis 4% beträgt.

4. Verfahren nach einem der Ansprüche 1 bis 3, wobei die Temperatur während der Reduktion des Polymerisationsgrades 50°C bis 100°C beträgt.

5. Verfahren nach einem der Ansprüche 1 bis 4, wobei zusätzlich ein Cheliermittel zugesetzt wird.

6. Verfahren nach Anspruch 5, wobei das Cheliermittel mindestens eines von Aminopolycarbonsäure (APCA), Ethylendiamintetraessigsäure (EDTA), Diethylentriaminpentaessigsäure (DTPA), Nitrilotriessigsäure (NTA), Phosphonsäure, Ethylendiamintetramethylen-Phosphonsäure (EDTMP), Diethylentriaminpentamethylen-Phosphonsäure (DTPMP), Nitrilotrimethylen-Phosphonsäure (NTMP), eine Polycarbonsäure, ein Gluconat, ein Citrat, ein Polyacrylat, ein Polyaspartat oder eine beliebige Kombination davon ist.

7. Verfahren nach Anspruch 5 oder 6, wobei die Menge des Cheliermittels, bezogen auf das Gewicht der Pulpe, etwa 0,1% beträgt.

8. Verfahren nach einem der Ansprüche 1 bis 7, wobei der Polymerisationsgrad um 10% bis 15% reduziert wird.

9. Verfahren nach einem der Ansprüche 1 bis 8, zusätzlich umfassend die Zugabe einer Säure, um den pH-Wert bei 2 bis 8 zu halten.

10. Verfahren nach einem der Ansprüche 1 bis 9, zusätzlich umfassend die Zugabe von Kohlendioxid, um den pH-Wert bei 2 bis 8 zu halten.

11. Verfahren nach einem der Ansprüche 1 bis 10, wobei die erste Zeitspanne mindestens 15 Minuten beträgt.

12. Verfahren nach einem der Ansprüche 1 bis 10, wobei die erste Zeitspanne mindestens 45 Minuten beträgt.

13. Verfahren nach einem der Ansprüche 1 bis 12, wobei das Oxidans Wasserstoffperoxid ist.

14. Verfahren nach Anspruch 1, umfassend
eine D-Stufe; und
eine E-Stufe, wobei eine Pulpe in Anwesenheit eines Katalysators nach der D-Stufe und vor der E-Stufe bei einem pH-Wert von 2 bis 8 gebleicht wird, und die Kupferzahl in der E-Stufe reduziert wird.

15. Verfahren nach Anspruch 1, umfassend
eine D-Stufe; und
eine E-Stufe, wobei die Pulpe in Anwesenheit eines Katalysators vor der D-Stufe und der E-Stufe bei einem pH-Wert von 2 bis 8 gebleicht wird, und die Kupferzahl in der E-Stufe reduziert wird.

16. Verfahren nach Anspruch 1, umfassend
eine erste E-Stufe; und
eine zweite E-Stufe, wobei die Pulpe in der ersten E-Stufe in Anwesenheit eines Katalysators bei einem pH-Wert von 2 bis 8 gebleicht wird, und die Kupferzahl in der zweiten Stufe reduziert wird.

## Revendications

1. Procédé pour la préparation d'une composition pour la conversion en une fibre Lyocell, procédé comprenant :
la mise en contact d'une pâte comprenant de la cellulose et au moins 7 % d'hémicellulose avec un oxydant et un catalyseur pour catalyser la réduction du degré de polymérisation de la cellulose pendant une première période de temps pour réduire le degré moyen de polymérisation de la cellulose à un pH de 2 à 8, puis la mise en contact de la pâte avec un agent alcalin pendant une seconde période de temps pour réduire l'indice de cuivre de la pâte à une valeur inférieure à 2, sans réduire substantiellement la teneur en hémicellulose de la pâte, dans lequel la quantité de catalyseur est inférieure à 30 ppm.

2. Procédé suivant la revendication 1, dans lequel le catalyseur comprend un ion métallique qui est au moins un ion métallique choisi entre Fe(II), Fe(III), Mn(II), Cu(II), Cu(I), Co(II), Co(III), Ni(II), leurs sels ou n'importe laquelle de leurs associations.

3. Procédé suivant la revendication 1 ou la revendication 2, dans lequel la quantité d'oxydant est de 1 % à 4 % sur la base du poids de la pâte.

4. Procédé suivant l'une quelconque des revendications 1 à 3, dans lequel la température au cours de la réduction du degré de polymérisation est de 50°C à 100°C.

5. Procédé suivant l'une quelconque des revendications 1 à 4, comprenant en outre l'addition d'un agent chélatant.

6. Procédé suivant la revendication 5, dans lequel l'agent chélatant est au moins un des agents consistant en l'acide aminopolycarboxylique (APCA), l'acide éthylènediamine-tétraacétique (EDTA), l'acide diéthylènetriaminepentaacétique (DTPA), l'acide nitrilotriacétique (NTA), l'acide phosphonique, l'acide éthylènediaminetétraméthylènephosphonique (EDTMP), l'acide diéthylènetriaminepentaméthylènephosphonique (DTPMP), l'acide nitrilotriméthylènephosphonique (NTMP), un acide polycarboxylique, un gluconate, un citrate, un polyacrylate, un polyaspartate ou n'importe laquelle de leurs associations.

7. Procédé suivant la revendication 5 ou la revendication 6, dans lequel la quantité d'agent chélatant est d'environ 0,1 % sur la base du poids de la pâte.

8. Procédé suivant l'une quelconque des revendications 1 à 7 dans lequel la réduction du degré de polymérisation est de 10 % à 15 %.

9. Procédé suivant l'une quelconque des revendications 1 à 8, comprenant en outre l'addition d'un acide pour maintenir le pH dans la plage de 2 à 8.

10. Procédé suivant l'une quelconque des revendications 1 à 9, comprenant en outre l'addition de dioxyde de carbone pour maintenir le pH dans la plage de 2 à 8.

11. Procédé suivant l'une quelconque des revendications 1 à 10, dans lequel la première période de temps est d'au moins 15 minutes.

12. Procédé suivant l'une quelconque des revendications 1 à 10, dans lequel la première période de temps est d'au moins 45 minutes.

13. Procédé suivant l'une quelconque des revendications 1 à 12, dans lequel l'oxydant est le peroxyde d'hydrogène.

14. Procédé suivant la revendication 1, comprenant
une étape D ; et
une étape E, dans lequel une pâte est blanchie en présence d'un catalyseur après l'étape D et avant l'étape E à un pH de 2 à 8, et l'indice de cuivre est réduit dans l'étape E.

15. Procédé suivant la revendication 1, comprenant
une étape D ; et
une étape E, dans lequel la pâte est blanchie en présence d'un catalyseur avant les étapes D et E à un pH de 2 à 8, et l'indice de cuivre est réduit dans l'étape E.

16. Procédé suivant la revendication 1, comprenant
une première étape E ; et
une seconde étape E, dans lequel la pâte est blanchie dans la première étape E en présence d'un catalyseur à un pH de 2 à 8, et l'indice de cuivre est réduit dans la seconde étape.
